# EUROPEAN PATENT SPECIFICATION

(11) **EP 1 855 032 B1**
(45) Date of publication and mention of the grant of the patent: **31.03.2010**
(21) Application number: 07107944.6
(22) Date of filing: 10.05.2007
(51) Int. Cl.: F16H 61/34, F16H 63/20, F16H 63/38, F16H 61/36, F16H 61/24, G05G 5/05

(54) **Control assembly for a longitudinal gearbox**
Steuerungsanordnung für ein längsstehendes Getriebe
Ensemble de contrôle pour boîte de vitesse longitudinale

(30) Priority: 12.05.2006 IT MI20060941
(43) Date of publication of application: 14.11.2007
(73) Proprietor: IVECO S.p.A., 10156 Torino (IT)
(72) Inventor: Musso, Diego, 10141 Torino (IT); Biglio, Sergio, 10091 Alpignano (IT)
(74) Representative: Borsano, Corrado

(56) References cited:
- EP-A- 1 555 464
- EP-A1- 0 488 857
- EP-A2- 1 262 691
- DE-A1- 2 935 590
- DE-A1- 4 428 206
- US-A- 5 321 993

## Description

### Field of the invention

The present invention relates to a control assembly for a longitudinal gearbox, in particular for a gearbox of a vehicle.

### State of the art

In the field of vehicles, in particular of industrial vehicles, longitudinal gearboxes are frequently used. It is common, in this kind of gearbox, that a control rod rotates to select the groups (couples) of gears and translates to engage a gear. The first of these movements corresponds to the action by the driver to move the selection lever leftwards or rightwards from the neutral position (usually to select between the pairs 1^{st}-2^{nd}, 3^{rd}-4^{th}, 5^{th}-6^{th}, reverse), or without moving for the pair 3^{rd} and 4^{th}. The second corresponds to the engagement of one of the gears in the pair. In any case, the selection movement precedes the shifting movement. While the former must be such that, unless followed by engagement, it allows the control rod and selection lever to return to the neutral position, the latter must terminate with blocking in the engaged position, it only being possible to remove said block in the event of a specific command by the driver, who must apply a moderate force to the gear shift lever.

The gear control rod, inside of the gearbox, is usually controlled by a control assembly that receives the command to perform the aforesaid movements from the selection lever, for example via control cables capable of transmitting motion, for example sheathed cables capable of traction and thrust, generating the rotation and translation of the control rod inside the gearbox, by means of specific control elements, for example by means of an element, generally known as a driving element, of an appropriate shape fixed to one end of the control rod. One widely used solution consists of a control assembly comprising two shafts, for selection and shifting, each made to rotate by the selection and shifting movements of the selection lever, and capable of operating the driving element. Other types of control assembly comprise a single shaft, capable of performing different movements. The control assembly generally comprises a box in which said control elements are housed and supported, fixed to the gearbox in an appropriate position, depending on the type of gearbox used, for example rear-mounted. A control assembly according to the preamble of claim 1 is known from EP-A-1 262 691.

Modern longitudinal gearboxes contain returning and holding devices, that operate the gear control rod, to return it to the neutral position, when the selection lever is released and the gear is not engaged, or to hold the gear in the engaged position, once it has been engaged and until it is disengaged by the driver. Said devices can comprise springs, profiles, couplings. The arrangement inside the gearbox, with operation directly on the control rod, using a single positioner, does not allow a correct calibration of the two functions (selection and shifting) and, on the other hand, if performed separately requires a high selection load that always allows the lever positioned in the cabin to return to neutral, with a minimum guaranteed load. For this reason different solutions and calibrations are required for the different gearbox versions. This makes it difficult to standardize the components used in the various gearboxes that may need to be produced. Moreover, problems of space and interference between the various components inside the gearbox, which is in itself a very complex piece of equipment, can make it necessary to adopt solutions that are not entirely satisfactory, in terms of the functionality and strength of said devices. Added to this is the fact that, for the same structural reasons outlined above, adjusting, repairing and replacing the components are extremely difficult and expensive operations, while replacing the whole gearbox is clearly not desirable. On the other hand, maintenance is a particularly important issue in the field of industrial vehicles, which are usually intended for a long and busy working life.

It would therefore be desirable to increase the level of standardization of the components even in case of diversified production, to simplify the construction of gearboxes, reduce the complexity and cost of maintenance operations, and improve the functionality of the shifting and holding devices.

### Summary of the invention

The drawbacks described above have been overcome according to the present invention with a control assembly according to Claim 1 and its depending claims.

The invention also relates to a gearbox system comprising:
a longitudinal gearbox provided with a control rod
a control assembly to control said gearbox as described above.

This invention relates in particular to that set forth in the appended claims.

### List of drawings

The present invention will now be illustrated through a detailed description of preferred, although non-exclusive, embodiments thereof illustrated, by way of a non-limiting example, with the aid of the accompanying drawings wherein:
figure 1 is a perspective view of a control assembly according to one aspect of the present invention, suitable to be rear-mounted on a longitudinal gearbox for industrial vehicles;
figure 2 is a schematic view of the control assembly in figure 1 from the part intended to be attached to the gearbox;
figure 3 is a schematic illustration of a cross-sectional view of the same control assembly as seen along viewing plane III of figure 2;
figure 4 is a schematic illustration of a cross-sectional view of the same control assembly as seen along viewing plane IV of figure 2;
figure 5 is a schematic illustration of a cross-sectional view of the same control assembly as seen along viewing plane V of figure 3;
figure 6 is a schematic illustration of a cross-sectional view of the same control assembly as seen along viewing plane VI of figure 3.

### Detailed description of a preferred embodiment of the invention

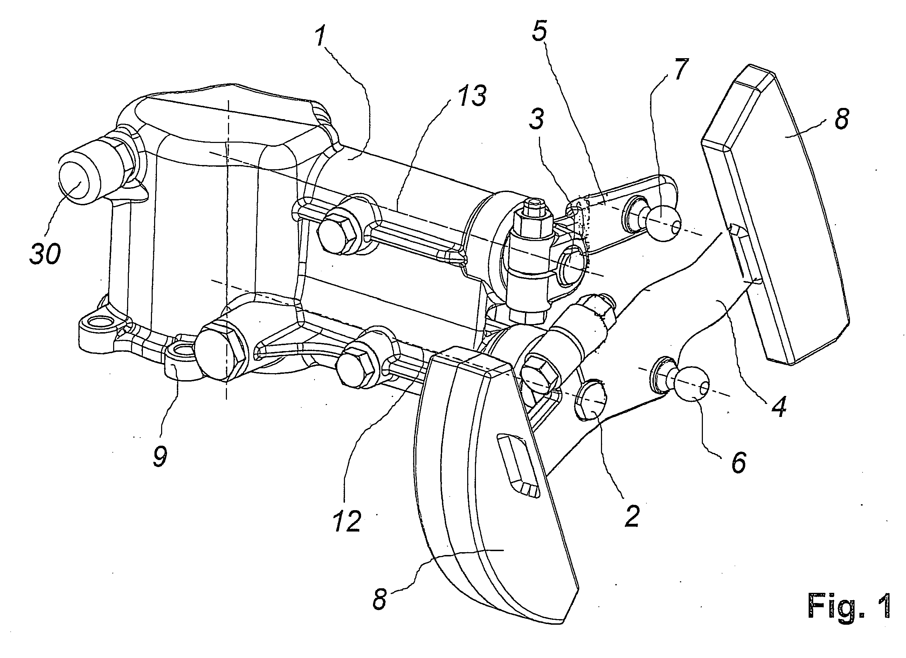

Figure 1 is a schematic illustration of a control assembly for a longitudinal gearbox of an industrial vehicle. That shown is intended to be rear-mounted on the gearbox, but alternative solutions are possible according to the present invention, on the basis of the prior art.

According to one aspect of the invention the assembly comprises a box 1 that contains and supports said transmission elements, which can be, according to a preferred aspect, two shafts, a shifting shaft 2 and a selection shaft 3 suitable to receive the motion, by means of the control levers 4 and 5 fixed to the ends thereof, for example via cables from a selector, which can be the selection lever operated by the driver; the movement of the lever causes the shafts to rotate about their own axes, respectively 12 and 13: the selection movement, as described above, causes the selection shaft 3 to rotate, the gear engagement (or disengagement) movement causes the shifting shaft 2 to rotate. The levers can be connected to the cables in a known way, for example by means of the elements 6 and 7, appropriately eccentric in relation to the axes of the shafts. Other elements, commonly used also in the prior art, can be present, for example the eccentric masses 8 suitable to transfer the appropriate inertia to the movements, to facilitate the movement and give the driver the right feeling of manoeuvrability. The assembly can be appropriately fixed to the gearbox by means of the flange 9, for example using bolts.

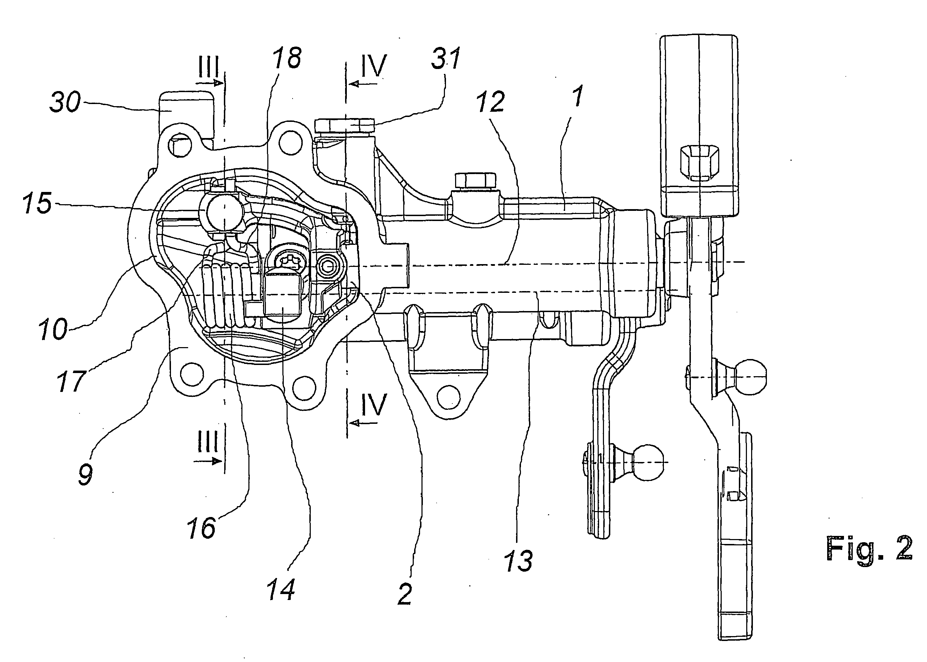

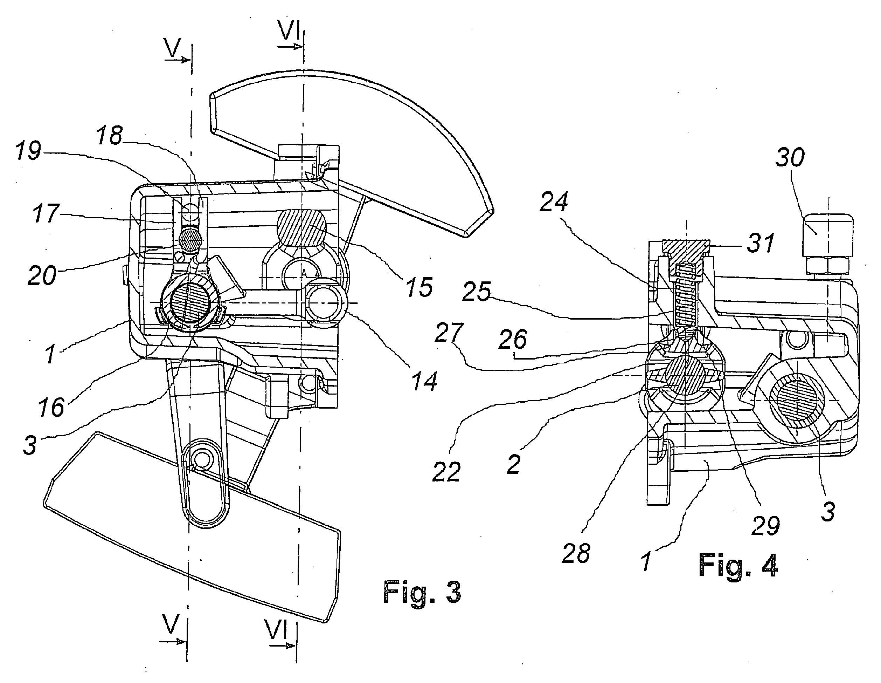

Figure 2 is a view of the assembly from the part intended to be connected to the gearbox, with the opening 10 facing a specific opening in the gearbox. One end of the gear control rod, which can be fitted with a driving element, of a known type and of an appropriate shape, extends through the opening 10 into the box 1 of the control assembly, to receive the motion from the transmission elements, in this case the shafts 2 and 3: the rotation of the shifting shaft 2 causes said rod to move along its own axis, in a direction that is substantially perpendicular to the plane of the drawing, the rotation of the selection shaft causes the rod to rotate about its own axis. These operations can be performed in a known way. In the drawings both shafts are illustrated in the position corresponding to neutral. Both can rotate in both directions at a predefined angle in relation to this position. This corresponds, for the map relating to the selection lever mentioned as regards the prior art, for the selection shaft to the movement towards 1^{st} and 2^{nd} gear in one direction and 5^{th} and 6^{th} or reverse gear in the other, for the shifting shaft to the movement to engage the odd gears in one direction and the even gears in the other. As in the normal way, the reverse gear can be aligned with the even or odd gears on the left or right side of the control. It is clear that, as in the prior art, different arrangements can be implemented, and more or fewer positions of the transmission elements can be envisaged. In the solution that is illustrated, the selection shaft 3 has a lever 14 (also see figure 3), the end of which moves downwards or upwards in correspondence with the rotation of the shaft, operating the driving element fitted to the control rod and causing the latter to rotate as described above.

The shifting shaft 2 also has a lever 15. The eccentric end thereof pushes the rod forwards or backwards (perpendicularly to the plane of the drawing in figure 2) by means of the driving element. The driving element and rod can be of a known form.

The assembly is provided with at least a part of the devices that cause said rod to return to neutral and to be held in one of the engaged positions.

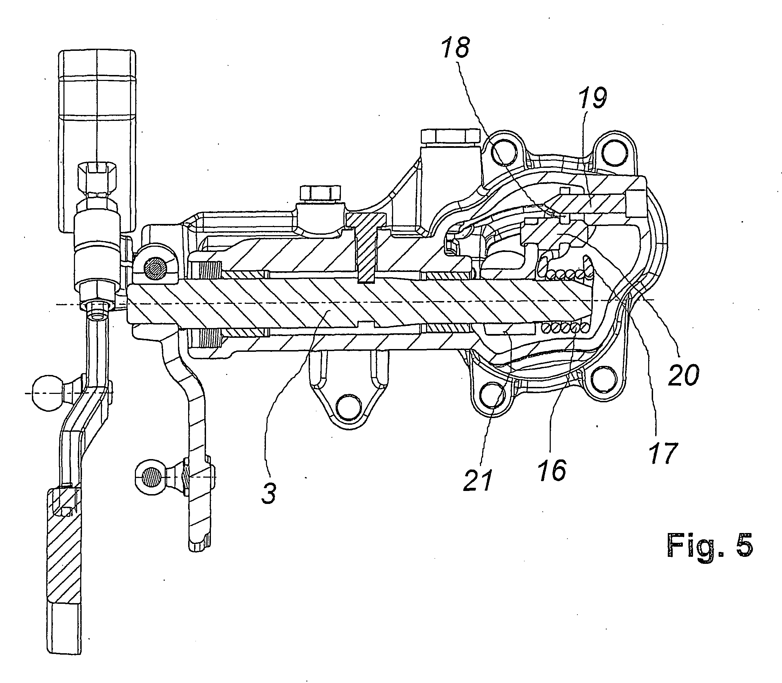

Figures 2, 3 and 5 show an example of a solution according to the present invention for the device for returning to the neutral position that operates the selection shaft 3. Different solutions can be used to perform this function, such as a spiral spring acting on a cam, or a return spring capable of turning the shaft to the neutral position from the other positions corresponding to different selections. The spiral return spring 16 can be inserted on one end of the selection shaft, the end arms 17 and 18 of the spring reach out to form a fork that extends in a direction that is substantially radial in relation to the selection shaft. Said end arms are arranged so as to straddle a first pin 19 integral with the box 1 and can be held thereby, one when the shaft 3 rotates in one direction, the other when the shaft 3 rotates in the opposite direction. The second pin 20 is integral with and eccentric in relation to the same shaft, being supported for example by the same support 21 of the lever 14, and is arranged parallel to the first pin. It pulls, with the rotation of the selection shaft, the end of the spring that is not held by the first pin. In this way the rotation in one direction or the other widens the fork formed by the ends of the return spring, bringing the shaft back to the position illustrated in the drawing, when other forces operating on the shaft cease; as mentioned previously, this position corresponds to neutral, with the selection lever completely released. The invention facilitates the return of the lever to the neutral position, when released, and makes it easier, in the example illustrated, to find the selection axis of the intermediate gears, 3^{rd} and 4^{th}, which also serves as reference for the other selection axes 1^{st}-2^{nd} and 5^{th}-6^{th}.

This gives the driver a feeling of greater precision of control.

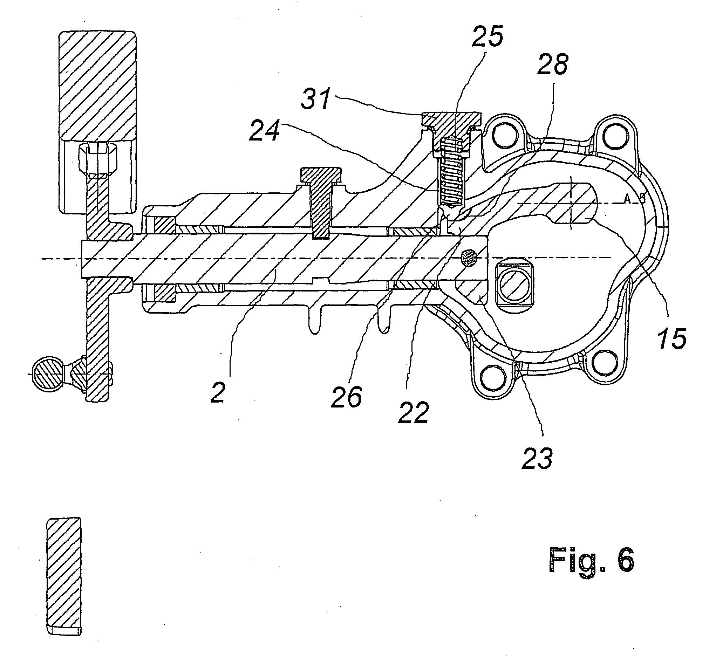

As regards the device for holding in a gear engaged position, reference is made to figures 4 and 6. The shaft 2 is provided with an appropriately shaped profile 22 that is integral therewith which can, according to one possible aspect of the invention, be provided directly on other elements present on the shaft, such as the base 23 of the lever 15. The profile interacts with a mobile pin 24, supported by the box 1 and mobile in a radial direction in relation to the shifting shaft, that is pushed against the profile by a compression spring 25. The end 26 of the mobile pin, which is preferably spherical or of a rounded shape engages with the notches 27, 28, 29 in the profile. The notch 28 corresponds to the neutral position between two gears in the same group (same position of the selection shaft), the other two correspond to the mobile pin following the rotation of the shifting shaft. The shape of the profile and of the notches is such that, cooperating with the mobile pin, the shifting shaft is held in the desired position, from which it can be only removed by applying an adequate force in that sense. In particular, passing from the neutral position to the engaged position and vice versa, the system exerts a resistance for a certain tract, that corresponds to the compression of the spring, and once the point of maximum compression has been surpassed it facilitates the definitive passage to the new position. It is easy for the person skilled in the art to adapt the shape of the profile and notches so as to optimize the manoeuvrability and functionality of the system to give the driver the feeling of good gear operation and the perception of engagement. The mobile pin and compression spring can be housed in a specific seat in the box 1 and can be inserted from the outside through an opening that can be closed for example by means of a threaded cap 31, that holds the pin and spring in the appropriate position.

Vehicle gearboxes are usually provided with venting means. According to a further aspect of the invention the gearbox control assembly is provided with said venting means; said means, of a type known in the prior art, are indicated by reference number 30 in the drawings. By placing the venting means on the box of the control assembly rather than on the gearbox it is possible to reduce the amount of oil that is lost due to the centrifugation and nebulization thereof by the moving gear mechanisms, especially when high temperatures are reached.

From the drawings the person skilled in the art can deduce other details useful for producing the control assembly, which are not described in detail here. Other variations are possible and can be introduced according to the knowledge of the person skilled in the art and in line with specific requirements.

Other alternative embodiments, besides that shown in the example, can be conceived and reduced to practice; for instance the transmission elements can consist of a single shaft capable of rotating and translating, and the holding and returning devices can be of a type other than those illustrated, without departing from the scope of the invention.

Placing the holding and returning devices in the box of the control assembly allows the parts to be replaced quickly, and facilitates adjustments and maintenance. Moreover it eliminates any limits as regards the size and design of the gearbox structure, which can vary. It is also easy to produce control assemblies suitable for use on a series of differently structured gearboxes, for use on different types of vehicles. Moving these elements into the control assembly simplifies the structure of the gearbox and facilitates the standardization of the components. Moreover it allows assembly to be performed at the end of the production line, reducing the risks of incorrect assembly, and complications during the various stages of assembling the gearbox.

The control assembly and gearbox according to the present invention are particularly suitable for manual longitudinal gearboxes, where a series of motion transmitting mechanisms are arranged between the selection lever and the gear control rod, and make it possible to improve functionality and manoeuvrability for the driver. However, the possible application on automated stage-geared gearbox systems is not excluded.

The invention also relates to a vehicle, in particular an industrial vehicle, provided with a gearbox system as described above.

## Claims

1. Control assembly for a longitudinal gearbox provided with a control rod, comprising elements (2, 3) for transmitting the gear selection and shifting movements to said rod;
devices (16, 22, 24, 25) for returning said rod to the neutral position and for holding said rod in the engaged position,
said devices being suitable to operate the control rod through said elements, said control assembly comprising a box (1), containing said elements, wherein said devices are contained in said box and supported thereby;
wherein said elements are a selection shaft (3) and a shifting shaft (2) suitable to be made to rotate about their own axes 12, 13) by means of levers (4, 5) suitable to receive motion from a selector, **characterized in that**:
- said elements are provided at one end with levers (14, 15) suitable to operate a driving element fixed to the end of the control rod of the gearbox;
- said box (1) of said control assembly is suitable for being externally fixed to the gearbox; and
- said box (1) comprises an opening (10) through which the end of the control rod, on which the driving element is fixed, is apt to extend in order to receive the gear selection and shifting movements from the shifting shaft (2) and the selection shaft (3).

2. Assembly according to claim 1, wherein said selection shaft is provided with a device (16, 19, 20) for returning to the neutral position.

3. Assembly according to claim 2 wherein said device comprises a return spring (16).

4. Assembly according to claim 3, wherein the ends (17, 18) of said return spring are suitable to engage one with a first pin (19) integral with the box and the other with a second pin (20) integral with said selection shaft, so as to deform said spring when the selection shaft is rotated from the neutral position.

5. Assembly according to claim 3, wherein said return spring is a coil spring acting on a cam profile.

6. Assembly according to claim 1, wherein said shifting shaft is provided with a profile (22) suitable to interact with the end (26) of a mobile pin (24) supported by said box and pushed by a compression spring (25) against said profile.

7. Assembly according to claim 6, wherein said profile comprises a notch (28) suitable to engage with said mobile pin when the shifting shaft is in the neutral position, and two notches (27, 29) suitable to engage with said mobile pin when the shifting shaft is in a gear engaged position.

8. Assembly according to any of the previous claims provided with gearbox venting means (30).

9. Manual gearbox system comprising:
a longitudinal gearbox provided with a control rod;
a control assembly to control said gearbox according to any of the previous claims.

10. Manual gearbox system according to claim 9, wherein said gearbox has five or six gears, plus reverse gear.

11. Manual gearbox system according to claim 9 or 10, comprising a selection lever capable of transmitting motion to said transmission elements via sheathed cables.

12. Industrial vehicle provided with a manual gearbox system according to any of the claims from 9 to 11.

## Patentansprüche

1. Steueranordnung für ein mit einer Steuerstange versehenes Längsgetriebe, umfassend: Elemente (2, 3) zum Übertragen der Gangwahl und der Schaltbewegungen zur Stange,
Vorrichtungen (16, 22, 24, 25) zum Rückführen der Stange in die neutrale Position und zum Halten der Stange in der eingegriffenen Position,
wobei die Vorrichtungen die Steuerstange durch die Elemente betreiben können, wobei die Steueranordnung eine die Elemente aufnehmende Box (1) umfasst, wobei die Vorrichtungen in der Box aufgenommen sind und hierdurch gestützt werden,
wobei die Elemente eine Wahlwelle (3) und eine Schaltwelle (2) sind, die um ihre eigenen Achsen (12, 13) durch Hebel (4, 5) gedreht werden können, die eine Bewegung von einem Auswähler empfangen können, **dadurch gekennzeichnet, dass**: die Elemente an einem Ende mit Hebeln (14, 15) versehen sind, die ein an dem Ende der Steuerstange des Getriebes fixiertes Antriebselement betreiben können,
die Box (1) der Steueranordnung extern an das Getriebe fixiert werden kann, und
die Box (1) eine Öffnung (10) umfasst, durch die sich das Ende der Steuerstange, an der das Antriebselement fixiert ist, erstrecken kann, um die Gangwahl und die Schaltbewegungen von der Schaltwelle (2) und der Wahlwelle (3) zu empfangen.

2. Anordnung gemäß Anspruch 1, bei der die Wahlwelle mit einer Vorrichtung (16, 19, 20) zum Rückführen zur neutralen Position versehen ist.

3. Anordnung gemäß Anspruch 2, bei der die Vorrichtung eine Rückführfeder (16) umfasst.

4. Anordnung gemäß Anspruch 3, bei der die Enden (17, 18) der Rückführfeder geeignet sind, dass eines an einem mit der Box integralen ersten Stift (19) eingreifen kann, und das andere an einem mit der Wahlwelle integralen zweiten Stift, um die Feder zu verformen, wenn die Wahlwelle aus der neutralen Position gedreht wird.

5. Anordnung gemäß Anspruch 3, bei der die Rückführfeder eine auf ein Nockenprofil wirkende Sprungfeder ist.

6. Anordnung gemäß Anspruch 1, bei der die Schaltwelle mit einem Profil (22) versehen ist, das mit dem Ende (26) eines beweglichen Stifts (24) interagieren kann, der durch die Box gestützt wird und durch eine Kompressionsfeder (25) gegen das Profil gedrückt wird.

7. Anordnung gemäß Anspruch 6, bei der das Profil eine Kerbe (28) umfasst, die am beweglichen Stift eingreifen kann, wenn sich die Schaltwelle in der neutralen Position befindet, und zwei Kerben (27, 29) umfasst, die am beweglichen Stift eingreifen können, wenn sich die Schaltwelle in einer Position mit eingelegtem Gang befindet.

8. Anordnung gemäß einem der vorangegangenen Ansprüche, die mit einem Getriebe-Druckausgleich-Mittel (30) versehen ist.

9. Manuelles Getriebesystem umfassend:
ein Längsgetriebe, das mit einer Steuerstange versehen ist,
eine Steueranordnung zum Steuern des Getriebes gemäß einem der vorangegangenen Ansprüche.

10. Manuelles Getriebesystem gemäß Anspruch 9, bei dem das Getriebe fünf oder sechs Gänge aufweist, plus einen Rückwärtsgang.

11. Manuelles Getriebesystem gemäß Anspruch 9 oder 10, das einen Wahlhebel umfasst, der über ummantelte Kabel eine Bewegung zu den Übertragungselementen übertragen kann.

12. Industriefahrzeug, das mit einem manuellen Getriebesystem gemäß einem der Ansprüche 9 bis 11 versehen ist.

## Revendications

1. Ensemble de commande pour une boîte de vitesses longitudinale munie d'une tige de commande, comportant des éléments (2, 3) pour transmettre les mouvements de sélection et de changement de vitesse à ladite tige,
des dispositifs (16, 22, 24, 25) pour ramener ladite tige à la position neutre et pour maintenir ladite tige dans la position en prise,
lesdits dispositifs étant adaptés pour actionner la tige de commande par l'intermédiaire desdits éléments, ledit ensemble de commande comportant un carter (1), contenant lesdits éléments, dans lequel lesdits dispositifs sont contenus dans ledit carter et supportés par celui-ci,
dans lequel lesdits éléments sont un arbre de sélection (3) et un arbre de changement de vitesse (2) adaptés pour être amenés à tourner autour de leurs axes propres (12, 13) au moyen de leviers (4, 5) adaptés pour recevoir un mouvement à partir d'un sélecteur, **caractérisé en ce** qui :
- lesdits éléments sont munis, à une extrémité, de leviers (14, 15) adaptés pour actionner un élément d'entraînement fixé à l'extrémité de la tige de commande de la boîte de vitesses,
- ledit carter (1) dudit ensemble de commande est adapté pour être fixé extérieurement à la boîte de vitesses, et
- ledit carter (1) comporte une ouverture (10) à travers laquelle l'extrémité de la tige de commande, sur laquelle l'élément d'entraînement est fixé, peut s'étendre afin de recevoir les mouvements de sélection et de changement de vitesse à partir de l'arbre de changement de vitesse (2) et de l'arbre de sélection (3).

2. Ensemble selon la revendication 1, dans lequel ledit arbre de sélection est muni d'un dispositif (16, 19, 20) pour retourner à la position neutre.

3. Ensemble selon la revendication 2, dans lequel ledit dispositif comporte un ressort de rappel (16).

4. Ensemble selon la revendication 3, dans lequel les extrémités (17, 18) dudit ressort de rappel sont adaptées pour venir en prise, l'une avec un premier ergot (19) d'un seul tenant avec le carter et l'autre avec un second ergot (20) d'un seul tenant avec ledit arbre de sélection, de manière à déformer ledit ressort lorsque l'arbre de sélection tourne à partir de la position neutre.

5. Ensemble selon la revendication 3, dans lequel ledit ressort de rappel est un ressort hélicoïdal agissant sur un profil de came.

6. Ensemble selon la revendication 1, dans lequel ledit arbre de changement de vitesse comporte un profil (22) adapté pour interagir avec l'extrémité (26) d'un ergot mobile (24) supporté par ledit carter et poussé par un ressort de compression (25) contre ledit profil.

7. Ensemble selon la revendication 6, dans lequel ledit profil comporte une encoche (28) adaptée pour venir en contact avec ledit ergot mobile lorsque l'arbre de changement de vitesse est dans la position neutre, et deux encoches (27, 29) adaptées pour venir en contact avec ledit ergot mobile lorsque l'arbre de changement de vitesse est dans une position de vitesse en prise.

8. Ensemble selon l'une quelconque des revendications précédentes, muni de moyens d'évent de boîte de vitesses (30).

9. Système de boîte de vitesses manuelle comportant :
une boîte de vitesses longitudinale munie d'une tige de commande,
un ensemble de commande pour commander ladite boîte de vitesses selon l'une quelconque des revendications précédentes.

10. Système de boîte de vitesses manuelle selon la revendication 9, dans lequel ladite boîte de vitesses a cinq ou six vitesses, plus une vitesse en marche arrière.

11. Système de boîte de vitesses manuelle selon la revendication 9 ou 10, comportant un levier de sélection capable de transmettre un mouvement auxdits éléments de transmission par l'intermédiaire de câbles gainés.

12. Véhicule industriel muni d'un système de boîte de vitesses manuelle selon l'une quelconque des revendications 9 à 11.
